# EUROPEAN PATENT SPECIFICATION

(11) **EP 1 318 114 B1**
(45) Date of publication and mention of the grant of the patent: **02.09.2009**
(21) Application number: 02258330.6
(22) Date of filing: 03.12.2002
(51) Int. Cl.: C03B 9/44, C03B 9/447

(54) **Take-out mechanism of a glass container forming machine**
Ausnehmmechanismus einer Hohlglasformmaschine
Méchanisme extracteur d'une machine à façonner le verre creux

(30) Priority: 05.12.2001 US 5393
(43) Date of publication of application: 11.06.2003
(73) Proprietor: Emhart Glass S.A., 6330 Cham (CH)
(72) Inventor: Pinkerton, Steven J., Avon, Connecticut 06001 (US)
(74) Representative: Warren, Anthony Robert

(56) References cited:
- GB-A- 2 232 151
- US-A- 4 298 373
- US-A- 5 429 651
- US-A- 5 652 490
- US-A- 5 791 452

## Description

The present invention relates to an I.S. (individual section) type of glass container forming machine and more particularly to the takeout mechanism for that machine.

In an I.S. machine, a glass container such as a bottle is formed in a two part blow mold and when it has been sufficiently cooled so that it can be moved, the blow mold parts open and a takeout mechanism grabs the bottle proximate the finish (i.e. the open top or neck of the bottle), lifts the bottle and carries it to a position suspended above a deadplate which is perforated to allow cooling air to blow upwardly against the entire bottom of the bottle, continuing the cooling process. When the bottom of the bottle has been sufficiently cooled the takeout mechanism releases the bottle dropping the bottle the distance it was held above the deadplate, onto the deadplate. A takeout mechanism of this type is disclosed in Applicant's GB-A-2,232,151.

US-A-5,429,651 discloses a takeout mechanism which is displaced to carry a row of bottles from the blow molds to a position suspended above the deadplate where the bottles are cooled, and the row is swung about a vertical axis to position the bottles in an alignment which forms an acute angle with both a transfer conveyor and the alignment of the bottles in the blow molds. The takeout mechanism is then further displaced to place the bottles on the deadplate. The angular alignment of the bottles contributes more effectively to the transfer of the bottles to the adjacent transfer conveyor by a pusher mechanism.

The present invention is directed to a takeout mechanism generally of the type disclosed in GB-2,232,151 and as defined in the preamble of claim 1.

It is an object of the present invention to provide an improved takeout mechanism.

According to the present invention, there is provided a takeout mechanism as defined in the characterizing clause of claim 1.

Reference will now be made to the accompanying drawings which illustrate a presently preferred embodiment incorporating the principles of the invention, and in which:-
Figure 1 is an oblique schematic view of a takeout mechanism;
Figure 2 is a side view showing the displacement of the takeout mechanism from the bottle pickup position to the bottle deposit position; and
Figure 3 is a logic diagram illustrating the operation of the control for this takeout displacement.

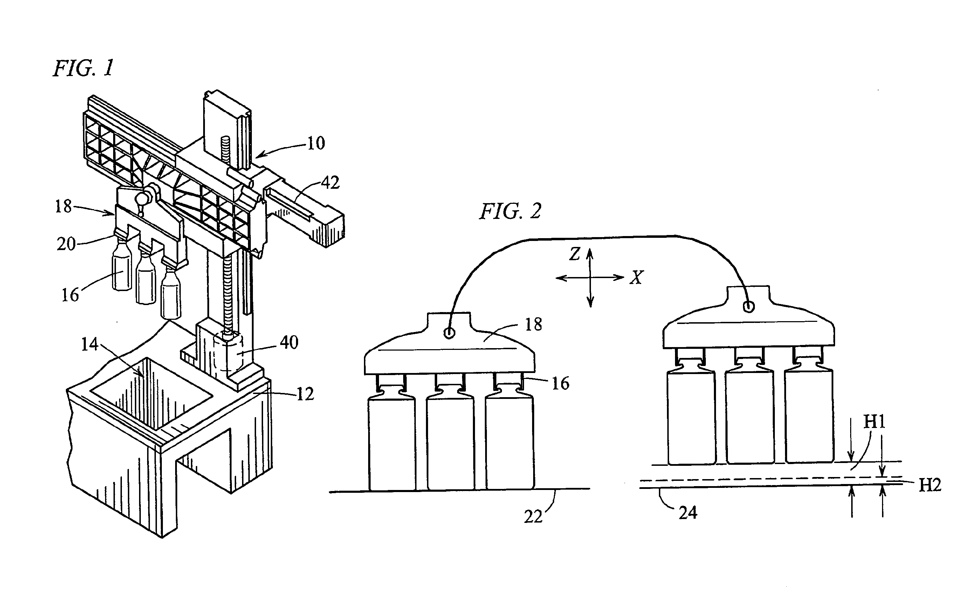

Figure 1 illustrates a preferred embodiment of mechanism 10 which is mounted on the section frame 12 of an I.S. machine proximate the blow station 14 where a parison (not shown), located within a pair of closed blow molds parts or halves (also not shown), is blown into a bottle 16. U.S.-A-5,895,513, illustrates a conventional takeout mechanism. The takeout mechanism includes a tong arm 18 which supports a tong head 20 for each bottle produced at the blow station. In the illustration, three bottles are held in three tong heads, and the individual section of the machine is accordingly operating as a triple gob I.S.

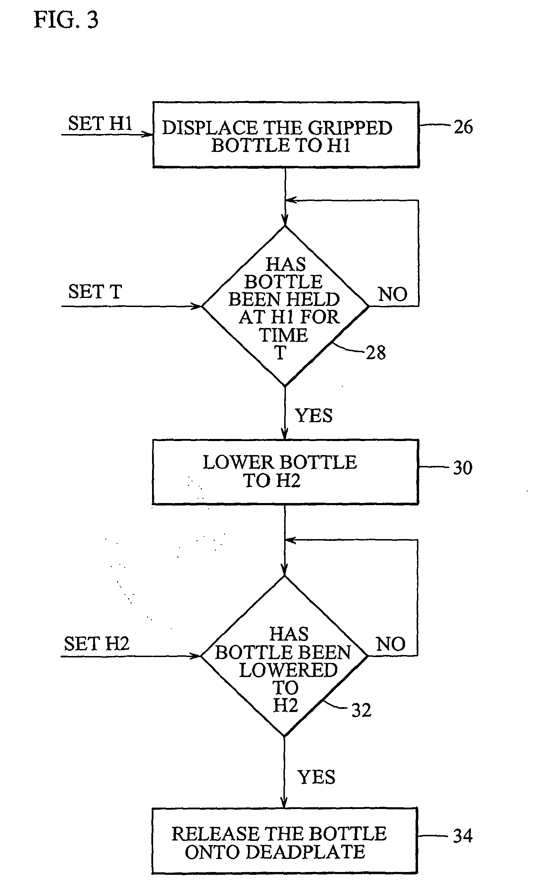

As shown in Figure 2, when the bottles have been sufficiently cooled, the blow molds will be opened so that each formed bottle sits on the bottom plate of the mold (schematically shown as line 22). The takeout mechanism is displaced over the formed bottles so that the tong heads can grip the bottles proximate the finish (the threaded, etc. top). The takeout control (Figure 3) will then Displace The Gripped Bottle To H1 in step 26 (a selected distance above a deadplate 24 which is selected to cool the bottom of the bottle as desired). Cooling air flows upwardly through holes in the deadplate to cool the bottom of the suspended bottles. When the bottoms have been sufficiently cooled (the query 28- "Has Bottle Been Held At H1 For Time T" is answered in the affirmative), the control will Lower Bottle To H2 in step 30 (H2 is a distance above a deadplate 24 which is selected to be at or very close to the deadplate). When the control answers the query 32-"Has Bottle Been Lowered To H2" in the affirmative, the control will Release The Bottle Onto The Deadplate in step 34. As shown the control has inputs for H1, H2 and time T so that an operator can define the displacement for the particular bottle being produced.

As illustrated in Figure 2, the takeout mechanism has vertical and horizontal displacement in a two axis mechanism with each mechanism controlled by a respective servomotor 40,42 as shown in Figure 1. Alternately the tong arm could be pivotally mounted and driven through an arc by a single servomotor.

Whilst, for the purposes of explanation, the terms "blow", "blowing", etc., have been used in relation to forming the parison into a bottle, it is to be understood that forming could alternatively be effected using a vacuum, i.e. negative pressure, rather than positive pressure.

## Claims

1. A takeout mechanism (10) for gripping a container (16) formed at the forming station (14) of an I.S. machine, displacing the container to a location proximate a deadplate (24) and releasing the container onto the deadplate, comprising
a tong arm (18),
a tong head (20) secured to said tong arm for gripping a container,
means including a control
for displacing said tong arm (18) from a first position whereat the container is gripped at the forming station (14) to a second position whereat the container is spaced a first selected distance (H1) above the deadplate (24),
for holding said tong arm at said second position for a selected time (T), and
for releasing the container onto the deadplate (24),
**characterised in that**
said control is operable
at the end of said selected time, to displace said tong arm downwardly toward the deadplate to a third position whereat the container is spaced a second distance (H2) above the deadplate (24) and,
when said tong head is at said third position, to release the container onto the deadplate (24).

2. A takeout mechanism according to claim 1, wherein at said third position the container is spaced a predetermined second distance (H2) above the deadplate (24).

3. A takeout mechanism according to claim 1 or 2, wherein said control has one or more inputs for determining one or more of the first distance (H1) of the container at the second position, the second distance (H2) of the container at the third position, and/or the selected time (T).

## Patentansprüche

1. Entnahmemechanismus (10) zum Greifen eines Behälters (16), der an einer Formstation (14) einer IS-Maschine geformt wurde, sowie zum Verschieben des Behälters an einen Ort in der Nähe einer Totplatte (24) und zum Freigeben des Behälters auf die Totplatte, umfassend
einen Zangenarm (18),
einen Zangenkopf (20), der zum Greifen eines Behälters am Zangenarm gesichert ist,
eine Einrichtung, umfassend eine Steuerung
zum Verschieben des Zangenarms (18) aus einer ersten Position, wo der Behälter an der Formstation (14) gegriffen wird, in eine zweite Position, wo sich der Behälter in einem ersten ausgewählten Abstand (H1) oberhalb der Totplatte (24) befindet,
zum Halten des Zangenarms in der zweiten Position für eine ausgewählte Zeit (T), und
zum Freigeben des Behälters auf die Totplatte,
**dadurch gekennzeichnet, dass**
die Steuerung
am Ende der ausgewählten Zeit betrieben werden kann, um den Zangenarm abwärts zur Totplatte in eine dritte Position zu verschieben, wo sich der Behälter in einem zweiten Abstand (H2) oberhalb der Druckplatte (24) befindet, und,
wenn sich der Zangenkopf in der dritten Position befindet, den Behälter auf die Totplatte (24) freizugeben.

2. Entnahmemechanismus nach Anspruch 1, wobei sich der Behälter in der dritten Position in einem vorbestimmten zweiten Abstand (H2) oberhalb der Druckplatte (24) angeordnet ist.

3. Entnahmemechanismus nach Anspruch 1 oder 2, wobei die Steuerung eine oder mehrere Eingaben zum Bestimmen des ersten Abstandes (H1) des Behälters in der zweiten Position und / oder des zweiten Abstandes (H2) des Behälters in der dritten Position und / oder der ausgewählten Zeit (T) umfasst.

## Revendications

1. Mécanisme extracteur (10) pour saisir un récipient (16) formé dans la station de formage (14) d'une machine sectionnelle, déplaçant le récipient jusqu'à un emplacement situé à proximité d'une plaque de démoulage (24) et relâchant le récipient sur la plaque de démoulage, comprenant :
un bras de préhension (18),
une tête de préhension (20) fixée audit bras de préhension pour saisir un récipient,
des moyens comprenant une commande :
pour déplacer ledit bras de préhension (18) d'une première position dans laquelle le récipient est saisi dans la station de formage (14) à une deuxième position dans laquelle le récipient est espacé selon une première distance (H1) sélectionnée au-dessus de la plaque de démoulage (24),
pour maintenir ledit bras de préhension à ladite deuxième position pendant un temps (T) sélectionné, et
pour relâcher le récipient sur la plaque de démoulage (24),
**caractérisé en ce que :**
ladite commande peut fonctionner :
à la fin dudit temps sélectionné, pour déplacer ledit bras de préhension vers le bas vers la plaque de démoulage jusqu'à une troisième position dans laquelle le récipient est espacé selon une seconde distance (H2) au-dessus de la plaque de démoulage (24), et
lorsque ladite tête de préhension est dans ladite troisième position, pour relâcher le récipient sur la plaque de démoulage (24).

2. Mécanisme extracteur selon la revendication 1, dans lequel dans la troisième position, le récipient est espacé selon une seconde distance (H2) prédéterminée au-dessus de la plaque de démoulage (24).

3. Mécanisme extracteur selon la revendication 1 ou 2, dans lequel ladite commande a une ou plusieurs entrées pour déterminer une ou plusieurs parmi la première distance (H1) du récipient dans la deuxième position, la seconde distance (H2) du récipient dans la troisième position et/ou le temps (T) sélectionné.
